# EUROPEAN PATENT SPECIFICATION

(11) **EP 1 895 673 B1**
(45) Date of publication and mention of the grant of the patent: **19.10.2011**
(21) Application number: 06725761.8
(22) Date of filing: 15.02.2006
(51) Int. Cl.: H04B 3/54, H04B 5/00, H01F 38/14

(54) **DEVICE FOR THE INDUCTIVE COUPLING OF A DATA-TRANSMISSION UNIT TO A PHASE OF AN ELECTRICAL POWER LINE AND CORRESPONDING PRODUCTION METHOD**
EINRICHTUNG ZUR INDUKTIVEN KOPPLUNG EINER DATENÜBERTRAGUNGSEINHEIT AN EINE PHASE EINER ELEKTRISCHEN STROMLEITUNG UND ENTSPRECHENDES HERSTELLUNGSVERFAHREN
DISPOSITIF DE COUPLAGE INDUCTIF D'UN EQUIPEMENT DE TRANSMISSION DE DONNEES A UNE PHASE D'UNE LIGNE ELECTRIQUE DE PUISSANCE ET PROCEDE DE FABRICATION ASSOCIE

(30) Priority: 16.02.2005 ES 200500335
(43) Date of publication of application: 05.03.2008
(73) Proprietor: Distribuidora Industrial de Automatismos y Teletransmisión S.A. (DIMAT S.A.), 08027 Barcelona (ES)
(72) Inventor: MORENO RODRIGUEZ, José, Antonio, 08020-Barcelona (ES); PONS MORENO, Salvador, 08940-Cornellá (Barcelona) (ES)
(74) Representative: Curell Aguilà, Mireia
(86) International application number: PCT/ES2006/000062
(87) International publication number: WO 2006/087403

(56) References cited:
- WO-A-2005/008913
- ES-A- 2 216 732
- ES-A1- 2 216 732
- ES-T1- 2 214 174
- ES-T1- 2 214 174
- JP-A- 2004 096 566

## Description

### Field of the invention

The invention relates to an inductive coupling device for data transmission equipment to a phase of an electrical power line in order to transmit, via said electrical power line, an electrical data signal with a frequency higher than 3 kHz, said device comprising a ring-shaped ferromagnetic core that defines a central eye and at least one conductive turn that passes through said central eye forming a loop, so that in the working position of said device a conductive cable from an electrical power line passes through said ferromagnetic core via the central eye thereof establishing an inductive coupling between said conductive turn and said conductive cable via said ferromagnetic core, with said ferromagnetic core being made up of at least two core parts that can be separated from one another thereby allowing said conductive cable to be inserted into said central eye.

The inductive coupling principle of a device of this type is similar to that of a transformer: the conductive turn is similar to the primary, and the actual electrical line is similar to the secondary.

The inductive coupling device to which the invention relates is particularly applicable in the technology of data transmission over electrical lines, known by the initials PLC meaning "powerline communication". Through this technology it is possible to establish a high speed data transmission network using existing low and medium voltage electrical networks as the transmission lines, thereby omitting the need to install specific wiring, such as for example a fiber optic laying. According to this principle, an existing electrical line, for example a medium voltage 24 kV between phases line, can simultaneously transmit electrical energy, by means of a signal at the standard frequency of 50 Hz (or 60 Hz), and a data flow at a higher frequency, over 3 kHz.

In order to transmit data between two particular points on an electrical power line, connection nodes must be established in these particular points between one phase of said line and a local data transmission network or an end user. In each of these connection nodes, data transmission equipment, responsible for managing the flow of the data to be transmitted, is connected to said phase via a coupling device whose main function is to adapt the impedances between the electrical line and the data transmission equipment, and also to condition the data signal bandwidth and provide the necessary electrical protection against line voltage. This invention relates to one of these coupling devices, and in particular to one of the inductive type, in other words wherein the impedances are adapted by means of an inductive coupling via a ferromagnetic core, without direct electrical contact with the electrical line.

### State of the art

Spanish patent application N° ES200401794 in the name of the applicant describes a capacitive type coupling device, in other words wherein the impedances between the electrical line and the data transmission equipment are adapted by means of a capacitive coupling. This type of device suffers from the drawback that it requires a connection with direct electrical contact with the electrical line and therefore it is delicate to install and must be fitted by a particularly qualified technician.

In comparison with a capacitive type coupling such as the one described in said patent application, an inductive type coupling via a ferromagnetic core has the advantage that it does not require direct electrical contact between the device and the electrical line; it is enough to position the device so that an inductive coupling is established via a ferromagnetic core arranged in the device proper.

Ammeters are known for electrical power lines based on an inductive coupling. This type of ammeters, described for example in US patent N° US4839600, comprises two C-shaped ferromagnetic semi-cores that are mutually coupled forming a core, so that the electrical line is arranged though the eye of the core. By virtue of this arrangement of two semi-cores that can be coupled to one another, the ammeter is easily positioned, without the need to handle the electrical line and without direct electrical contact.

European patent application No. EP1406369A2 describes a PLC ("powerline communication") signal inductive coupling device which, like the ammeter described in document US4839600 cited above, is shaped as two semi-cores that can be coupled together, thereby allowing it to be easily installed on an electrical line. The device described in said document:EP1406369A2 has the particular feature that the semi-cores are made from a nanocrystalline or amorphous ferromagnetic material which is particularly suitable for inductive couplings with high intensity alternate currents, as in the case of electrical power lines. However, it must be mentioned that the use of this type of ferromagnetic core for this purpose was already known beforehand, as can be seen for example in PCT application No. WO0246777A2.

Said document EP1406369A2 also describes a method for manufacturing a coupling device that basically consists in forming a ring-shaped ferromagnetic core by placing a coil of a nanocrystalline or amorphous ferromagnetic material strip inside a mould, impregnating the core with a fusible insulating mass, removing the core from the mould and finally cutting the core in two. However, the device obtained by means of this method suffers from the drawback that it is not very robust On the other hand, the embodiments described in document EP1406369A2 are an outline and do not describe a duly completed coupling device for practical use.

International PCT application No. WO-2005/008913A discloses a PLC inductive coupling device specially designed to be applied on shielded electrical lines, such as underground electrical power lines between two transformer stations. This device has the same main arrangement as in said documents US4839600 and EP1406369A2, comprising a ring which encloses the electrical line and a coil which is coupled to said ring by induction and connected to a transmission and reception device, but with the particularity that a by-pass is connected to the shield of the electrical line and to the ground or to the compensating potential, allowing a direct induction of the signal current to the conductor and preventing capture of interference currents collected by the shield.

### Disclosure of the invention

The purpose of this invention is to overcome the afore-mentioned drawbacks. This purpose is achieved by means of an inductive coupling device of the type indicated at the beginning, **characterized in that** it comprises two complementary, half-ring shaped semi-housings made from electrical insulating material and provided with mutual assembling means, with each of said semi-housings having a conduit in which said core parts are housed and encapsulated in a solidified resin compound, with said conductive turn also being housed in one of said conduits, said semi-housings being able to adopt an assembled position forming a closed clamp centered in said central eye and an open position in which at least one opening is defined, and in that said device includes, in one of said semi-housings, an external connector for an electrical data signal and a transmitter-receiver device arranged as an interface between said external connector and said at least one conductive turn.

In this description, as well as in the claims, it must be understood that the half-ring shape of the semi-housings corresponds to a ring-shaped section, but it is not necessarily circular. For example, it can be a C- or U-shape that has some straight sections. In other words, the half-ring shape of the semi-housings refers to the fact that the set of two assembled semi-housings is ring-shaped, but not necessarily circular. Neither are the two semi-housings necessarily symmetrical. Furthermore, it must be understood that the semi-housings and the resin compound are different elements. The parts of the core are encapsulated in the resin compound and housed in the conduits of the semi-housings, whereby the resin compound is surrounded at least partially by a semi-housing made from electrical insulating material.

As for the transmitter-receiver device, this is a circuit that ensures the synchronization between the high frequency data signal transmitted by the electrical power line and the signal received or sent via the external connector, and it can include other functions such as for example protection against network surges. It is not considered necessary to describe this transmitter-receiver device in detail, since it is an element that can be envisaged by a skilled person.

The layout with two semi-housings made from electrical insulating material gives the device according to the invention considerable mechanical robustness and electrical protection, while also making it easier to manufacture, as will be seen later. Furthermore, it is very easy to install this device: it is enough to mutually assemble the two semi-housings so that they form a clamp around the electrical line. The device installed this way can connect directly to data transmission equipment by simply connecting a signal cable to the external connector on the device, which is for example a BNC type connector.

Preferably, said assembling means for the semi-housings comprise a rotary connection that links said semi-housings at one end thereof, with said assembled and open positions being obtained by rotating one semi-housing with respect to the other one around said rotary connection. This arrangement greatly facilitates the operation of assembling the semi-housings around the electrical line, as it means said operation can be done with just one hand. Also, preferably, said assembly means comprise anchoring means between the ends of the semi-housing opposite said rotary connection. This way an integral device is provided, which means that the fitter does not have to handle various parts as would occur in the case of two separate semi-housings and separate coupling means.

Preferably, in one of said semi-housings an external ground connection point is arranged connected to said anchoring means. The ground connection of said anchoring means, which can be metallic, is therefore easier and safer.

Preferably, each of said conduits of the semi-housings has its two ends open, so that at each of said ends one surface of said core parts is exposed, and preferably, in the assembled position of the semi-housings, each core part surface exposed at one end of the conduit of a semi-housing is in contact with the surface of a corresponding core part in the other semi-housing. In other words once the semi-housings are assembled, the core parts of the two semi-housings touch one another thereby forming a closed core. The contact between the core parts of the two semi-housings is ensured by the action of the assembling means, which press the semi-housings against each other. This preferable arrangement avoids having to provide an air gap and provides a sufficiently efficient ferromagnetic core. Alternatively, where necessary, an adhesive glass tape can be provided as an air gap between said core parts.

Preferably, in each of said semi-housing conduits there is a single core part, with said core part forming a semicircular shaped semi-core. Advantageously, the two semi-cores can by symmetrical.

Preferably, in each of the semi-housing conduits a positioning element is arranged that pushes the core part towards the wall nearest said central eye. Advantageously, said positioning element is a leaf spring arranged next to the wall of said conduit furthest from said central eye. These positioning elements ensure that, during the manufacturing of said device, the position of the core parts is appropriate so that they form a closed ferromagnetic core when the semi-housings meet in their assembled position.

Preferably, the space inside said conduits in the semi-housings that is not occupied by said core parts is filled by a solidified resin compound, so that these conduits, as well as making it easier to position the core parts during the manufacturing of the device, also form a mould for the resin compound encapsulating said core parts.

Preferably, said semi-housings have one of their main surfaces flat and open on said conduit, with said open surface being covered by said resin compound filling. This arrangement is particularly advantageous because it means that during the manufacturing of said device, which will be described later, the various components can easily be positioned in the semi-housings via said open surface.

Preferably, said transmitter-receiver device is made in a printed circuit that is housed inside one of said semi-housing. Advantageously, said printed circuit is arranged in the conduit of one of said semi-housings and is in direct contact with said resin compound. This arrangement means that the resin compound also encapsulates the transmitter-receiver, whereby the latter remains fixed and protected by the actual resin compound.

Preferably, said external connector is provided with some pins that go through the outer wall of the semi-housing and are inserted into corresponding holes on said printed circuit. The external connector and the printed circuit support each other this way, thereby making it easier to correctly position the elements before encapsulating with the resin compound.

Preferably, each conduit extends at one end thereof in a section which, in the assembled position of said semi-housings, fits into the corresponding end of the other conduit, thereby obtaining a more robust assembly. This arrangement also provides greater insulation, because it avoids the presence of a groove between the two assembled semi-housings, throughwhich an electric arch could occur.

The invention also relates to a method for manufacturing an inductive coupling device of the type described at the beginning, **characterized in that** starting with two complementary, half-ring shaped semi-housings made from electrical insulating material, each of said semi-housings being provided with an open-ended conduit and having a flat open surface on said conduit, the following stages are carried out:
- a first assembly stage that comprises, regardless of the order of completion, placing a positioning element in each of said conduits, placing at least one conductive turn forming a loop in the conduit of one of the semi-housings, placing an external connector in said semi-housing for electrical data signals, and also placing in said semi-housing conduit a printed circuit that comprises a transmitter-receiver device, connecting said printed circuit to said connector and to said conductive turn, and introducing into each of said semi-housing conduits a half-ring shaped ferromagnetic semi-core, overcoming the resistance of said positioning elements and passing one of said semi-cores inside the loop formed by said conductive turn;
- a second filling stage wherein said conduits are filled with a resin compound; and
- a third drying stage wherein a drying process is carried out until said resin compound is completely solidified.

Preferably, said resin compound is a cold-hardening mixture that contains an epoxy resin and a hardening agent, said resin compound being applied in direct contact with said printed circuit.

Advantageously, before said second filling stage the ends of said internal conduits are covered with a stopper element, which can be for example putty or plasticine, said stopper element being removed when said third stage has been completed.

Preferably, said second filling stage is performed until said flat open surface of each semi-housing is covered by said resin compound.

### Brief description of the drawings

Other advantages and characteristics of the invention will be evident from the following description, in which a preferable embodiment of the invention is described, in a non-limiting way, with reference to the accompanying drawings.

The figures show:
Fig. 1, a perspective view of the coupling device according to the invention, in an open position;
Fig. 2. a similar view to Fig. 1, with the device in a closed or assembled position;
Fig. 3, a perspective top view showing a breakdown of the parts of the device in Fig. 1;
Fig. 4, a similar view to Fig. 3 showing the assembled device, before applying the resin compound;
Fig. 5, a section view according to plane V-V in Fig. 4.

### Detailed description of an embodiment of the invention

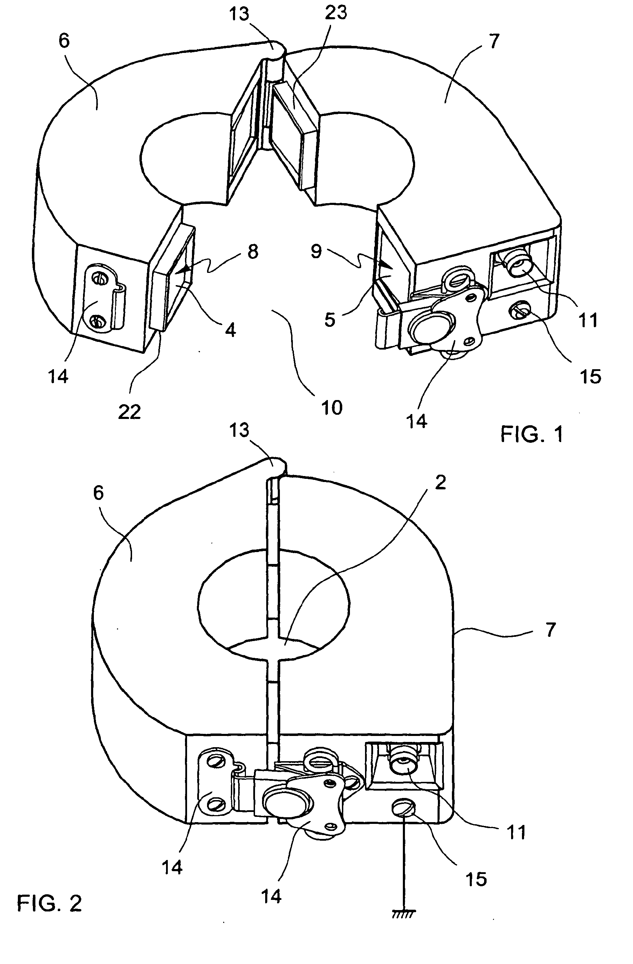

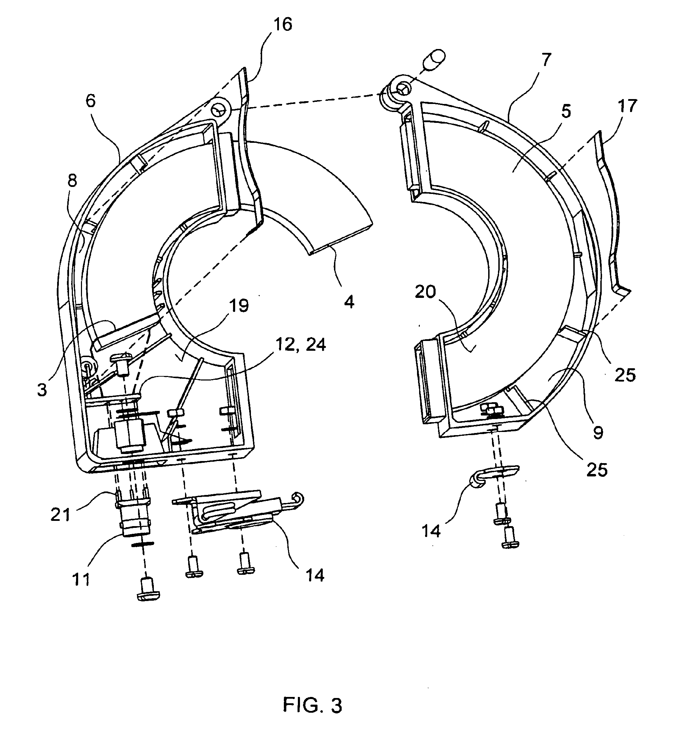

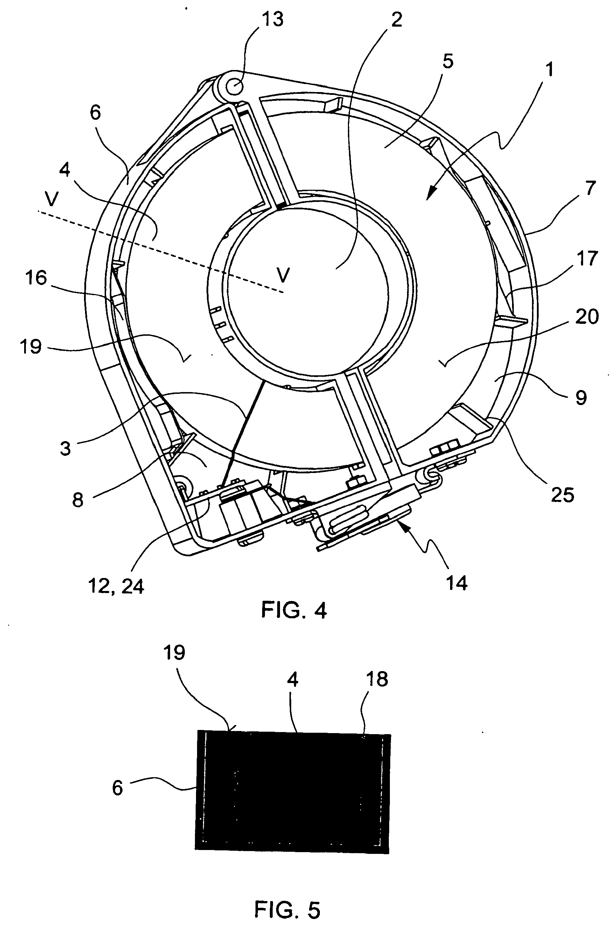

The embodiment shown in Figs. 1 through 5 corresponds to an inductive coupling device intended to couple data transmission equipment to one of the phase of an electrical power line. The device in this embodiment can be coupled to a 50 Hz, up to 300 A, alternate current line, and is capable of transmitting via said line a data transmission signal with a frequency range (bandwidth) between 1 MHz and 40 MHz.

The device is made up of two semi-housings 6, 7 that are single, plastics injected parts. In each semi-housing 6, 7 a conduit 8, 9 is arranged in which a core part 4, 5 is housed, which forms a ferromagnetic semi-core. These ferromagnetic semi-cores 4, 5 are symmetrical and have a semi-circular shape, so that when assembled together they form a toroidal magnetic core 1. In this example, the toroidal semi-cores from the catalogue of the German company VACUUMSCHMELZE GmbH are used, in particular those having reference number T60162-L2108-W, made from "Vitroperm", a ferromagnetic material having a nanocrystalline structure that is particularly indicated for making couplings to high intensity currents in a wide frequency range. However, this choice of ferromagnetic material must not be understood as a limiting feature. In fact, the application has successfully tested other materials, such as for example crystalline structure nickel and iron cores.

In conduit 8 of one of semi-housing 6 a copper conductive turn 3 is also housed, which forms a loop around semi-core 4. In this example, one single turn 3 is provided, whereby one single loop is formed around semi-core 4. However, more turns could be provided; for example, for an application to transmit narrow band PLC signals, twenty turns could be provided.

Conduits 8, 9 occupy the space inside semi-housings 6, 7, where some ribs 25 limit guides for semi-cores 4, 5 and some leaf springs 16, 17 act as positioning elements for said semi-cores 4, 5 during the assembly operation, pushing them towards the wall of conduit 8, 9 that is nearest to central eye 2. The ends of conduits 8, 9 are open via windows in semi-housing 6, 7, so that in each end a surface of semi-cores 4, 5 is exposed. These surfaces of semi-cores 4, 5 are in contact and press against one another when semi-housings 6, 7 are in the assembled position (Fig. 2), so that the two semi-cores form a closed core without an air gap. Each conduit 8, 9 has at one end thereof an extension section 22, 23 that fits into the corresponding end of the other conduit in said assembled position of semi-housings 6, 7.

In conduit 8 of semi-housing 6 a printed circuit 24 is arranged, which comprises a transmitter-receiver device 12 connected to conductive turn 3 and to an external connector 11 of the BNC type for electrical data signals. Transmitter-receiver device 12 includes holes into which there are inserted pins 21 of external connector 11, which pass through corresponding holes in the outer wall of the semi-housing.

Semi-housings 6, 7 have main surfaces 19, 20 that are flat and open on conduits 8, 9. The space inside conduits 8, 9 that is not occupied by semi-cores 4, 5 is filled with a solidified resin compound 18, whereby said semi-cores 4, 5 are encapsulated in resin compound 18, which covers open surfaces 19, 20 of semi-housings 6, 7. Printed circuit 24 and conductive turn 3 are also encapsulated in direct contact with resin compound 18. Printed circuit 24 is not damaged during the filling operation by virtue of the fact that resin compound 18 is of the cold-hardening type, made from an epoxy resin and a hardening agent.

Semi-housings 6, 7 are assembled together at one end thereof by means of a hinge-type rotary connection 13, so that they can adopt an assembled position (Fig. 2) wherein they clamp an electrical line (not shown) that passes through central eye 2 and an open position (Fig. 1) wherein an opening 10 is defined for said electrical line to pass through. At the opposite ends of rotary connection 13, semi-housings 6, 7 have anchoring means 14 that keep semi-housings 6, 7 pressed against each other in their assembled position, so that they also keep semi-cores 4, 5 against one another. In this example, anchoring means 14 are made up of a rotary "link lock" type closure, which is easy to handle. This closure, which is metallic, is connected to an outside ground connection point 15 arranged in semi-housing 6.

The manufacture of the inductive coupling device described above begins with assembling the two semi-housings 6, 7 with a hinge 13. Then, the following stages are carried out:
- a first assembly stage that consists in placing positioning elements 16, 17 in conduits 8, 9 and, in conduit 8, conductive turn 3 that forms a loop; printed circuit 24 is also placed in this conduit 8, and it is attached to external connector 11 by pins 21; printed circuit 24 is connected to external connector 11 and to conductive turn 3 and semi-cores 4, 5 are introduced through the open ends of conduits 8, 9, overcoming the resistance of positioning elements 16, 17 and passing semi-core 4 inside conductive turn 3; the "link look" closure 14 is positioned and ground connection 15 is connected;
- a second filling stage wherein conduits 8, 9 are filled with a cold-hardening resin compound 18 that contains an epoxy resin and a hardening agent; before said second filling stage, the ends of conduits 8, 9 are covered with a stopper element, which in this case is plasticine; the filling operation is performed by placing semi-housings 6, 7 so that their flat open surfaces 19, 20 are arranged horizontally at the top and by pouring resin compound 18 in a cold, fluid state into said open surfaces 19, 20 until they are full;
- a third drying stage wherein a drying operation of approximately 24 hours is performed, until resin compound 18 is completely solidified; finally, the stopper elements of conduits 8, 9 are removed.

If necessary, the manufacturing of the coupling device can include a final finishing stage wherein the outer surface of resin compound 18 can be polished at the level of open surfaces 19, 20.

## Claims

1. Inductive coupling device for data transmission equipment to a phase of an electrical power line in order to transmit, via said electrical power line, an electrical data signal with a frequency higher than 3 kHz, said device comprising a ring-shaped ferromagnetic core (1) that defines a central eye (2) and at least one conductive turn (3) that passes through said central eye (2) forming a loop, so that in the working position of said device a conductive cable from an electrical power line passes through said ferromagnetic core (1) via its central eye (2) thereby establishing an inductive coupling between said conductive turn (3) and said conductive cable through said ferromagnetic core (1), with said ferromagnetic core (1) being made up of at least two core parts (4, 5) that can be separated from one another thereby allowing said conductive cable to be inserted into said central eye (2), **characterized in that** it comprises two complementary, half-ring shaped semi-housings (6, 7) made from an electrical insulating material and provided with mutual assembly means (13, 14), with each of said semi-housings (6, 7) being provided with a conduit (8, 9) in which said core parts (4, 5) are housed and encapsulated in a solidified resin compound (18), with said conductive turn (3) also being housed in one of said conduits (8, 9), with said semi-housings (6, 7) being suitable for adopting an assembled position forming a closed clamp centered in said central eye (2) and an open position in which at least one opening (10) is defined, and **in that** said device includes, in one of said semi-housings (6, 7), an external connector (11) for electrical data signals and a transmitter-receiver device (12) arranged as an interface between said external connector (11) and said at least one conductive turn (3).

2. Device according to claim 1, **characterized in that** said semi-housing assembly means comprise a rotary connection (13) that links said semi-housings (6, 7) at one end thereof, with said assembled and open positions being obtained by rotating one semi-housing with respect to the other around said rotary connection (13).

3. Device according to claim 2, **characterized in that** said assembly means also comprise anchoring means (14) between the ends of semi-housings (6, 7) opposite said rotary connection (13).

4. Device according to claim 3, **characterized in that** in one of said semi-housings (6, 7) an external ground connection (15) is provided connected to said anchoring means (14).

5. Device according to any of the claims 1 to 4, **characterized in that** each of said semi-housing conduits (8, 9) has its two ends open, so that at each of said ends a surface of said core parts (4, 5) is exposed.

6. Device according to claim 5, **characterized in that** in said assembled position of the semi-housings each surface of core parts (4, 5) that is exposed at one end of semi-housing conduit (8, 9) is in contact with the surface of a corresponding core part (4, 5) in the other semi-housing.

7. Device according to any of the claims 1 through 6, **characterized in that** in each of said semi-housing conduits (8, 9) there is a single core part (4, 5), with said core part forming a semi-circular semi-core.

8. Device according to claim 7, **characterized in that** in each of said semi-housing conduits (8, 9) a positioning element (16, 17) is provided that pushes the core part towards the wall that is nearest to said central eye (2).

9. Device according to claim 8, **characterized in that** said positioning element (16, 17) is a leaf spring arranged next to the wall of said conduit (8, 9) that is furthest from said central eye (2).

10. Device according to any of claims 1 through 9, **characterized in that** the space inside said semi-housing conduits (8, 9) that is not occupied by said core parts (4, 5) is filled with a solidified resin compound (18).

11. Device according to claim 10, **characterized in that** said semi-housings (6, 7) have one of their main surfaces (19, 20) flat and open on said conduit (8, 9), with said open surface (19, 20) being covered by said resin compound (18) filling.

12. Device according to any of claims 1 through 11, **characterized in that** said transmitter-receiver device (12) is made up in a printed circuit (24) that is housed inside one of said semi-housings (6, 7).

13. Device according to claims 10 and 12, **characterized in that** said printed circuit (24) is arranged in the conduit (8, 9) of one of said semi-housings and it is in direct contact with said resin compound (18).

14. Device according to claim 13, **characterized in that** said external connector (11) is provided with pins (21) that go through the outer wall of the semi-housing and are inserted into corresponding holes in said printed circuit (24).

15. Device according to any of claims 2 through 14, **characterized in that** each conduit (8, 9) extends at one end thereof in a section (22, 23) which, in the assembled position of said semi-housings, fits into the corresponding end of the other conduit.

16. Manufacturing method for an inductive coupling device according to claim 1, **characterized in that** starting with two complementary, half-ring shaped semi-housings (6, 7) made from electrical insulating material, with each of said semi-housings (6, 7) having an open-ended conduit (8, 9) and having a flat, open surface (19, 20) on said conduit (8, 9), the following stages are carried out:
- a first assembly stage that comprises, regardless of the order of completion, placing a positioning element (16, 17) in each of said conduits (8, 9), placing at least one conductive turn (3) forming a loop in conduit (8, 9) of one of the semi-housings, placing an external connector (11) for electrical data signals in said semi-housing, also placing a printed circuit (24) in the conduit of said semi-housing, which comprises a transmitter-receiver device (12), connecting said printed circuit (24) to said external connector (11) and to said conductive turn (3), and introducing in each of said conduits of semi-housings a half-ring shaped ferromagnetic semi-core (4, 5), overcoming the resistance of said positioning elements (16, 17) and passing one of said semi-cores (4, 5) inside the loop formed by said conductive turn (3);
- a second filling stage wherein said conduits (8, 9) are filled with a resin compound (18); and
- a third drying stage wherein a drying operation is carried out until said resin compound (18) has completely solidified.

17. Method according to claim 16, **characterized in that** said resin compound (18) is a cold-hardening mixture that contains an epoxy resin and a hardening agent, with said resin compound (18) being applied in direct contact with said printed circuit (24).

18. Method according to claims 16 or 17, **characterized in that** before said second filling stage the ends of said conduits (8, 9) are covered with a stopper element, with said stopper element being removed upon completion of the third drying stage.

19. Method according to any of the claims 16 to 18, **characterized in that** said second filling stage is performed until said flat, open surface (19, 20) of each semi-housing (6, 7) is covered by said resin compound (18).

## Patentansprüche

1. Induktive Kopplungsvorrichtung für Datenübertragungsausstattung an einer Phase einer elektrischen Stromleitung, um über die elektrische Stromleitung ein elektrisches Datensignal mit einer Frequenz von mehr als 3 kHz zu übertragen, wobei die Vorrichtung einen ringförmigen ferromagnetischen Kern (1) umfasst, der ein zentrales Auge (2) definiert, und wenigstens eine leitende Wendel (3) die eine Schleife ausbildet, die durch das zentrale Auge (2) hindurchgeht, so dass in der Arbeitsposition der Vorrichtung ein leitendes Kabel von einer elektrischen Stromleitung durch den ferromagnetischen Kern (1) über sein zentrales Auge (2) hindurchgeht und hierdurch eine induktive Kopplung zwischen der leitenden Wendel (3) und dem leitenden Kabel durch den ferromagnetischen Kern (1) hergestellt wird, wobei der ferromagnetische Kern (1) aus wenigstens zwei Kernteilen (4,5) hergestellt ist, die voneinander getrennt werden können, um es **dadurch** dem leitenden Kabel zu erlauben, in das zentrale Auge eingefügt zu werden, **dadurch gekennzeichnet, dass** es zwei komplementäre halbringförmige Halbgehäuse (6,7) aufweist, die aus einem elektrisch isolierenden Material hergestellt sind und mit beidseitigen Montagemitteln (13,14) ausgestattet sind, wobei jede der Halbgehäuse (6,7) mit einem Kanal (8,9) ausgestattet ist, in den die Kernteile (4,5) untergebracht sind und mit einer ausgehärteten Harzmischung (18) ummantelt sind, wobei die leitende Wendel (3) auch in einem der Kanäle (8,9) untergebracht ist, wobei das Halbgehäuse (6,7) geeignet ist, eine montierte Position einzunehmen, die eine geschlossene in dem zentralen Auge zentrierte Klemme ausbildet, und eine geöffnete Position, in der wenigstens eine Öffnung (10) definiert ist und **dadurch** dass die Vorrichtung in einer der Halbgehäuse (6,7) eine externe Verbindung (11) für elektrische Datensignale, und eine Sende-und Empfangsvorrichtung (12) einschließt, die als eine Schnittstelle zwischen der externen Verbindung und der wenigstens einen leitenden Wendel (3) angeordnet ist.

2. Vorrichtung gemäß Anspruch 1, **dadurch gekennzeichnet, dass** die Halbgehäusemontagemittel eine drehbare Verbindung (13) umfassen, die die Halbgehäuse (6,7) an einem ihrer Enden verbindet, wobei die montierte und offenen Positionen verlangt wird, durch Drehung des einen Halbgehäuses in Bezug auf das Andere um die drehbare Verbindung (13).

3. Vorrichtung gemäß Anspruch 2, **dadurch gekennzeichnet, dass** die Montagemittel weiterhin Verankerungsmittel (14) umfassen und zwar zwischen den Enden der Halbgehäuse (6,7) gegenüberliegend der drehbaren Verbindungen (13).

4. Vorrichtung gemäß Anspruch 3, **dadurch gekennzeichnet, dass** in einer der Halbgehäuse (6,7) eine externe Erdungsverbindung (15) zur Verfügung gestellt wird, die mit den Verankerungsmitteln (14) verbunden ist.

5. Vorrichtung gemäß einem der Ansprüche 1 bis 4, **dadurch gekennzeichnet, dass** jeder der Halbgehäusekanäle (8,9) ihre beiden Enden offen hat, so dass an jedem der Enden eine Fläche der Kernbestandteile (4,5) frei liegt.

6. Vorrichtung gemäß Anspruch 5, **dadurch gekennzeichnet, dass** in der montierten Position der Halbgehäuse jede Fläche der Kernbestandteile (4,5) die an einem Ende des Halbgehäusekanals (8,9) frei liegt, mit der Fläche des entsprechenden Kernteils (4,5) in dem anderen Halbgehäuse in Kontakt steht.

7. Vorrichtung gemäß einen der Ansprüche 1 bis 6, **dadurch gekennzeichnet, dass** sich in jedem der Halbgehäusekanäle (8,9) ein einzelner Kornbestandteil (4,5) befindet, wobei der Kernbestandteil einen halbkreisförmigen Halbkern ausbildet.

8. Vorrichtung gemäß Anspruch 7, **dadurch gekennzeichnet, dass** in jedem der Halbgehäusekanäle (8,9) ein Positionierungselement (16,17) zur Verfügung steht, das den Kernbestandtel in Richtung der Wand die dem zentralen Auge am nächsten ist, drückt.

9. Vorrichtung gemäß Anspruch 8, **dadurch gekennzeichnet, dass** das Positionierungselement (16,17) eine Blattfeder ist, die neben der Wand des Kanals (8,9) angeordnet ist, der am weitesten von zentralen Auge (2) entfernt ist.

10. Vorrichtung gemäß einem der Ansprüche 1 bis 9, **dadurch gekennzeichnet, dass** der Raum im inneren der Halbgehäusekanäle (8,9), der nicht durch die Kernbereiche (4,5) ausgefüllt ist, mit einer ausgehärteten Harzmischung (18) gefüllt ist.

11. Vorrichtung gemäß Anspruch 10, **dadurch gekennzeichnet, dass** eine der Hauptflächen (19,20) der Halbgehäuse (6,7) flach und zum Kanal (8,9) offen ist, wobei die offenen Fläche (19,20) mit der Harzmischungsfülung (18) bedeckt ist.

12. Vorrichtung gemäß einem der Ansprüche 1 bis 11, **dadurch gekenntzeichnet, dass** die Sende- und Empfangsvorrichtung (12) aus einer gedruckten Schaltung (24) besteht, die in einer der Halbgehäuse (6,7) untergebracht ist.

13. Vorrichtung gemäß Anspruch 10 und 12, **dadurch gekennzeichnet, dass** die gedruckte Schaltung (24) im Kanal (8,9) einer der Halbgehäuse angeordnet ist und in direktem Kontakt mit der Harzmischung (18) ist.

14. Vorrichtung gemäß Anspruch 13, **dadurch gekennzeichnet, dass** die externe Verbindung (11) mit Stiften (21) ausgestattet ist, die durch die äußere Wand des Halbgehäuses hindurchgehen und in entsprechende Löcher der gedruckten Schaltung (24) eingefügt sind.

15. Vorrichtung gemäß einem der Ansprüche 2 bis 14, **dadurch gekennzeichnet, dass** sich jeder Kanal (8,9) an einem seiner Enden in einem Bereich (22,23) erstreckt, der in montierter Position der Halbgehäuse in ein entsprechendes Ende des anderen Kanals passt.

16. Herstellungsverfahren für eine induktive Kopplungsvorrichtung gemäß Anspruch 1, **dadurch gekennzeichnet, dass** beginnend mit zwei komplementären halbkreisförmigen Halbgehäusen (6,7), die aus einem elektrisch isolierenden Material hergestellt sind, wobei jedes der Halbgehäuse (6,7) einen offenen Kanal aufweist und eine flache offene Fläche (19,20) auf dem Kanal (8,9) aufweiset, die folgenden Stufen ausgeführt werden:
- eine ersten Montagestufe, die ungeachtet der Ausführungsreihenfolge die Anordnung eines Positionierungselements ( 16,17) in jedem der Kanäle (8.9) umfasst, das Anordnen von wenigstens einer leitenden Wendel (3) die eine Schleife im Kanal (8,9) einer der Halbgehäuse ausbildet, das Anordnen einer externen Verbindung (11) für elektrische Datensignale in dem Halbgehäuse, sowie Anordnen einer gedruckten Schaltung (24) in dem Kanal des Halbgehäuses, das eine Sende- und Empfangseinrichtung (12) umfasst, das Verbinden der gedruckten Schaltung (24) mit der externen Verbindung (11) und der leitenden Wendel (3),und Einführen eines halbringförmigen ferromagnetischen Kerns (4,5) in jeden der Kanäle der Halbgehäuses, Überwinden des Widerstands der Positionierungselemente (16,17) und Passieren eines der Halbkerne (4,5), im inneren der Schleife, die ausgebildet wird durch die leitende Wendel (3);
- einer zweiten Füllstufe, wobei die Kanäle (8,9) mit einer Harzmischung (18) gefüllt werden: und
- einer dritten Trocknungsstufe die solange durchgeführt wird, bis die Harzmischung (18) vollständig ausgehärtet ist.

17. Verfahren gemäß Anspruch 16, **dadurch gekennzeichnet, dass** die Harzmischung (18) eine kalthärtende Mischung ist, die ein Epoxyharz und einen Härter enthält, wobei die Harzmischung (18) in direktem Kontakt mit der gedruckten Schaltung (24) aufgebracht wird.

18. Verfahren gemäß Anspruch 16 oder 17, **dadurch gekennzeichnet, dass** vor der zweiten Füllstufe die Enden der Kanäle (8,9) mit einem Stopfenelement bedeckt werden, wobei das Stopfenelement nach Abschluss der dritten Trocknungsstufe entfernt wird.

19. Verfahren gemäß einem der Ansprüche 16 bis 18, **dadurch gekennzeichnet, dass** die zweite Füllstufe solange durchgeführt wird, bis die flache offene Fläche (19,20) jedes der Halbgehäuse (6,7) mit der Harzmischung (18) bedeckt ist.

## Revendications

1. Dispositif de couplage inductif pour équipement de transmission de données vers une phase d'une ligne électrique afin de transmettre, via ladite ligne électrique, un signal de données électrique avec une fréquence supérieure à 3 kHz, ledit dispositif comprenant un coeur ferromagnétique annulaire (1) qui définit un oeil central (2) et au moins une spire conductrice (3) qui traverse ledit oeil central (2) en formant une boucle, de façon que, dans la position de travail dudit dispositif, un câble conducteur provenant d'une ligne électrique traverse ledit coeur ferromagnétique (1) via son oeil central (2) en établissant ainsi un couplage inductif entre ladite spire conductrice (3) et ledit câble conducteur par l'intermédiaire dudit coeur ferromagnétique (1), ledit coeur ferromagnétique (1) étant constitué d'au moins deux parties de coeur (4, 5) qui peuvent être séparées l'une de l'autre en permettant ainsi audit câble conducteur d'être inséré dans ledit oeil central (2), **caractérisé en ce qu'**il comprend deux demi-boîtiers complémentaires de forme semi-annulaire (6, 7) faits en un matériau électriquement isolant et pourvus de moyens d'assemblage mutuel (13, 14), chacun desdits demi-boîtiers (6, 7) était pourvu d'un conduit (8, 9) dans lequel lesdites parties de coeur (4, 5) sont logées et encapsulées dans un composé en résine solidifiée (18), ladite spire conductrice (3) étant également logée dans l'un desdits conduits (8, 9), lesdits demi-boîtiers (6, 7) étant adaptés pour adopter une position assemblée en formant une pince fermée centrée dans ledit oeil central (2) et une position ouverte dans laquelle au moins une ouverture (10) est définie, et **en ce que** ledit dispositif comprend, dans l'un desdits demi-boîtiers (6, 7), un connecteur externe (11) pour des signaux de données électriques et un dispositif émetteur-récepteur (12) agencé sous la forme d'une interface entre ledit connecteur externe (11) et ladite au moins une spire conductrice (3).

2. Dispositif selon la revendication 1, **caractérisé en ce que** lesdits moyens d'assemblage de demi-boîtiers comprennent une connexion rotative (13) qui relie lesdits demi-boîtiers (6, 7) à une extrémité de ceux-ci, lesdites positions assemblée et ouverte étant obtenues par rotation d'un demi-boîtier par rapport à l'autre autour de ladite connexion rotative (13).

3. Dispositif selon la revendication 2, **caractérisé en ce que** lesdits moyens d'assemblage comprennent aussi des moyens d'ancrage (14) entre les extrémités des demi-boîtiers (6, 7) opposées à ladite connexion rotative (13).

4. Dispositif selon la revendication 3, **caractérisé en ce que**, dans l'un desdits demi-boîtiers (6, 7), est prévue une connexion à la terre externe (15) connectée auxdits moyens d'ancrage (14).

5. Dispositif selon l'une quelconque des revendications 1 à 4, **caractérisé en ce que** chacun desdits conduits de demi-boîtier (8, 9) a ses deux extrémités ouvertes, de façon qu'à chacune desdites extrémités, une surface desdites parties de coeur (4, 5) soit exposée.

6. Dispositif selon la revendication 5, **caractérisé en ce que**, dans ladite position assemblée des demi-boîtiers, chaque surface des parties de coeur (4, 5) qui est exposée à une extrémité d'un conduit de demi-boîtier (8, 9) soit en contact avec la surface d'une partie de coeur correspondante (4, 5) dans l'autre demi-boîtier.

7. Dispositif selon l'une quelconque des revendications 1 à 6, **caractérisé en ce que**, dans chacun desdits conduits de demi-boîtier (8, 9), il y a une seule partie de coeur (4, 5), ladite partie de coeur formant un demi-coeur semi-circulaire.

8. Dispositif selon la revendication 7, **caractérisé en ce que**, dans chacun desdits conduits de demi-boîtier (8, 9), est prévu un élément de positionnement (16, 17) qui pousse la partie de coeur vers la paroi la plus proche dudit oeil central (2).

9. Dispositif selon la revendication 8, **caractérisé en ce que** ledit élément de positionnement (16, 17) est un ressort à lames agencé au voisinage de la paroi dudit conduit (8, 9) la plus éloignée dudit oeil central (2).

10. Dispositif selon l'une quelconque des revendications 1 à 9, **caractérisé en ce que** l'espace à l'intérieur des conduits de demi-boîtier (8, 9) qui n'est pas occupé par lesdites parties de coeur (4, 5) est rempli d'un composé en résine solidifiée (18).

11. Dispositif selon la revendication 10, **caractérisé en ce que** lesdits demi-boîtiers (6, 7) ont une de leurs surfaces principales (19, 20) qui est plate et ouverte sur ledit conduit (8, 9), ladite surface ouverte (19, 20) étant recouverte du remplissage de composé en résine (18).

12. Dispositif selon l'une quelconque des revendications 1 à 11, **caractérisé en ce que** ledit dispositif émetteur-récepteur (12) est réalisé sous la forme d'un circuit imprimé (24) qui est logé à l'intérieur de l'un des demi-boîtiers (6, 7).

13. Dispositif selon les revendications 10 et 12, **caractérisé en ce que** ledit circuit imprimé (24) est disposé dans le conduit (8, 9) de l'un desdits demi-boîtiers et est en contact direct avec ledit composé en résine (18).

14. Dispositif selon la revendication 13, **caractérisé en ce que** ledit connecteur externe (11) est pourvu de broches (21) qui traversent la paroi extérieure du demi-boîtier et sont insérées dans des trous correspondants dans ledit circuit imprimé (24).

15. Dispositif selon l'une quelconque des revendications 2 à 14, **caractérisé en ce que** chaque conduit (8, 9) s'étend, à une extrémité de celui-ci, dans une section (22, 23) qui, dans la position assemblée desdits demi-boîtiers, s'adapte dans l'extrémité correspondante de l'autre conduit.

16. Procédé de fabrication d'un dispositif de couplage inductif selon la revendication 1, **caractérisé en ce qu'**en partant de deux demi-boîtiers complémentaires de forme semi-annulaire (6, 7) faits en un matériau électriquement isolant, chacun desdits demi-boîtiers (6, 7) ayant un conduit à extrémité ouverte (8, 9) et ayant une surface ouverte plate (19, 20) sur ledit conduit (8, 9), sont effectuées les étapes suivantes :
- un premier stade d'assemblage qui comprend, quel que soit l'ordre de réalisation, le placement d'un élément de positionnement (16, 17) dans chacun desdits conduits (8, 9), le placement d'au moins une spire conductrice (3) formant une boucle dans un conduit (8, 9) de l'un des demi-boîtiers, le placement d'un connecteur externe (11) pour signaux de données électriques dans ledit demi-boîtier, également le placement d'un circuit imprimé (24) dans le conduit dudit demi-boîtier, qui comprend un dispositif émetteur-récepteur (12), la connexion dudit circuit imprimé (24) audit connecteur externe (11) et à ladite spire conductrice (3), et l'introduction, dans chacun desdits conduits de demi-boîtiers, d'un demi-coeur ferromagnétique de forme semi-annulaire (4, 5), surmontant la résistance desdits éléments de positionnement (16, 17), et le passage de l'un des demi-coeurs (4, 5) à l'intérieur de la boucle formée par ladite spire conductrice (3) ;
- un deuxième stade de remplissage dans lequel lesdits conduits (8, 9) sont remplis d'un composé en résine (18) ; et
- un troisième stade de séchage dans lequel une opération de séchage est effectuée jusqu'à ce que ledit composé en résine (18) ait complètement solidifié.

17. Procédé selon la revendication 16, **caractérisé en ce que** ledit composé en résine (18) est un mélange durcissant à froid qui contient une résine époxy et un agent durcisseur, ledit composé en résine (18) étant appliqué en contact direct avec ledit circuit imprimé (24).

18. Procédé selon la revendication 16 ou 17, **caractérisé en ce qu'**avant ledit deuxième stade de remplissage, les extrémités desdits conduits (8, 9) sont recouverts d'un élément formant bouchon, ledit élément formant bouchon étant retiré après l'achèvement du troisième stade de séchage.

19. Procédé selon l'une des revendications 16 à 18, **caractérisé en ce que** ledit deuxième stade de remplissage est effectué jusqu'à ce que la surface ouverte plate (19, 20) de chaque demi-boîtier (6, 7) soit recouverte dudit composé en résine (18).
